# FASCICULE DE BREVET EUROPEEN

(11) **EP 3 395 760 B1**
(45) Date de publication et mention de la délivrance du brevet: **18.08.2021**
(21) Numéro de dépôt: 18168387.1
(22) Date de dépôt: 20.04.2018
(51) Int. Cl.: C01B 17/16, B01J 37/20, B01J 23/30, B01J 23/755, B01J 23/882, B01J 23/883, B01J 27/049, B01J 27/051, B01J 35/02, B01J 35/08, B01J 35/10

(54) **PROCÉDÉ DE PRODUCTION DE SULFURE D'HYDROGÈNE DANS UN RÉACTEUR À LIT CATALYTIQUE CIRCULANT**
HERSTELLUNGSVERFAHREN VON SCHWEFELWASSERSTOFF IN EINEM KATALYTISCHEN WIRBELSCHICHTREAKTOR
METHOD FOR PRODUCING HYDROGEN SULPHIDE IN A CIRCULATING BED CATALYTIC REACTOR

(30) Priorité: 28.04.2017 FR 1753738
(43) Date de publication de la demande: 31.10.2018
(73) Titulaire: Eurecat S.A., 07800 La Voulte-sur-Rhône (FR)
(72) Inventeur: DUFRESNE, Pierre, 26400 AOUSTE SUR SYE (FR); GALLIOU, Pauline, 07800 SAINT LAURENT DU PAPE (FR); ITALIANO, Giuseppe, 26000 VALENCE (FR); VIGLIANTI, Ezio Antonino, 95020 ACI BONACCORSI (IT); LABRUYERE, Franck, 07800 CHARMES SUR RHONE (FR)
(74) Mandataire: Casalonga

(56) Documents cités:
- EP-A1- 0 359 356
- EP-A1- 0 612 561
- EP-A1- 0 785 022
- EP-A1- 2 676 926
- US-A- 2 214 859

## Description

La présente invention a pour objet la préparation de sulfure d'hydrogène à partir de soufre élémentaire et d'hydrogène, par un procédé en mode continu mettant en œuvre un catalyseur en lit mobile (ou lit circulant).

Le sulfure d'hydrogène ou hydrogène sulfuré (H₂S) est un intermédiaire chimique employé dans de nombreux procédés industriels, par exemple pour la préparation de composés organiques soufrés, ou dans des traitements de sulfuration telles que (et de manière non limitative) pour la sulfuration des catalyseurs intervenant dans les réactions d'hydrotraitement dans les domaines du raffinage et de la pétrochimie.

Le sulfure d'hydrogène peut être préparé de manière connue en soi, en faisant réagir du soufre élémentaire sous forme liquide ou gazeuse, et de l'hydrogène, en présence ou non d'un catalyseur à base de métaux hydrogénants. Les procédés industriels sont souvent réalisés à des températures élevées, d'autant plus que la réaction est connue pour être très exothermique.

Pour obtenir un rendement satisfaisant en sulfure d'hydrogène, il est souvent nécessaire d'effectuer la réaction à pression élevée et/ou d'employer un excès stoechiométrique de soufre.

La demande EP 0 785 022 porte sur un procédé de présulfuration d'un catalyseur de conversion d'hydrocarbures contenant au moins un métal des groupes VI ou VIII de la classification périodique des éléments. Ce procédé a pour objectif d'activer le catalyseur et ne concerne nullement la production de sulfure d'hydrogène.

La demande EP 0 612 561 décrit un procédé de traitement de particules de catalyseur ou d'adsorbants qui consiste à faire monter lesdites particules dans une spire hélicoïdale vibrante dans laquelle elles sont soumises à un traitement thermique. Ce procédé permet d'effectuer des traitements spécifiques du catalyseur en atmosphère contrôlée tels que : strippage, régénération, oxydation, présulfuration, sulfuration, réduction, chloration, et ne vise nullement la production de sulfure d'hydrogène.

La Demanderesse a maintenant mis au point un procédé innovant pour la production de sulfure d'hydrogène à partir d'hydrogène et de soufre, qui permet de remédier à certains inconvénients des procédés de l'art antérieur.

Le procédé selon la présente invention se caractérise en ce qu'il comprend les étapes suivantes :
(a) La mise en contact du soufre avec un catalyseur solide comprenant au moins un métal, choisi parmi les métaux des groupes VIB et VIII de la Classification Périodique des Eléments, sous forme de sulfure métallique, à une température allant de 120 à 160°C ;
(b) La circulation du mélange de soufre et de catalyseur issu de l'étape (a) dans une zone réactionnelle, dans laquelle ledit mélange est mis en contact avec de l'hydrogène, la zone réactionnelle présentant une température au point d'entrée du catalyseur supérieure ou égale à 150°C et une température au point de sortie du catalyseur inférieure ou égale à 300°C, et une pression inférieure ou égale à 3 bars (3.10⁵ Pa) ;
(c) La séparation du catalyseur et des effluents gazeux contenant de l'hydrogène sulfuré ; et
(d) Le recyclage du catalyseur vers l'étape (a).

Le procédé selon l'invention se caractérise ainsi en ce que le catalyseur circule en boucle entre une zone (A) de mise en contact avec le soufre et une zone réactionnelle (B) dans laquelle s'effectue la conversion du soufre et de l'hydrogène en sulfure d'hydrogène.

Le procédé selon l'invention permet de préparer du sulfure d'hydrogène avec des rendements élevés, dans des conditions contrôlées de température et de pression, inférieures à celles généralement employées dans l'art antérieur.

Notamment, il permet un bon contrôle de la température au cours de la réaction de conversion du soufre en sulfure d'hydrogène, ainsi qu'une bonne utilisation de la chaleur générée au cours de la réaction afin de contrôler la température du catalyseur dans la zone de mise en contact du soufre avec le catalyseur.

De plus, contrairement à certains procédés de l'art antérieur, il ne nécessite pas d'employer un excédent stœchiométrique de soufre. Il permet une conversion complète du soufre, sans qu'il soit nécessaire d'effectuer une deuxième étape catalytique.

La conversion du soufre étant complète, les effluents gazeux en sortie du réacteur ne contiennent pas de soufre. Ils ne contiennent pas ou peu de composés polysulfanes (c'est-à-dire des composés de type H₂Sₙ avec n un nombre allant de 2 à 8).

Dans le procédé de l'invention, les effluents gazeux en sortie du réacteur (étape (c) ci-avant) contiennent de l'hydrogène sulfuré à une teneur d'au moins 30% en volume, de préférence au moins 50% en volume, plus préférentiellement au moins 75% en volume, et mieux encore au moins 90% en volume. Exprimée en poids, la teneur en hydrogène sulfurée desdits effluents gazeux est avantageusement d'au moins 88% en poids.

Il convient de noter que les effluents gazeux en sortie du réacteur (étape (c) ci-avant) ne contiennent pas ou très peu d'eau. Ainsi, la teneur en eau desdits effluents gazeux est typiquement inférieure ou égale à 3% en volume, ou à 1,5% en poids.

En effet, il n'y a pas de formation d'eau lors de la mise en œuvre des étapes (a) et (b) du procédé de l'invention, et l'eau éventuellement présente dans les effluents gazeux peut provenir entre autres de l'humidité présente dans les réactifs (notamment dans le soufre) et de l'humidité ambiante.

L'invention sera décrite plus en détail ci-dessous, en référence aux figures annexées.
La Figure 1 illustre une unité de production de sulfure d'hydrogène conforme au procédé de l'invention, fonctionnant avec une circulation de catalyseur et d'hydrogène s'effectuant à co-courant.
La Figure 2 illustre une unité de production de sulfure d'hydrogène conforme au procédé de l'invention, fonctionnant avec une circulation de catalyseur et d'hydrogène s'effectuant à contre-courant.

La présente invention permet de préparer du sulfure d'hydrogène à partir de soufre élémentaire (Sx) et d'hydrogène (H₂), selon une réaction connue en soi qui est la suivante :

Sₓ + x H₂ → x H₂S

avec x un nombre entier allant de 6 à 20.

De préférence, le soufre élémentaire a pour formule S₈.

Le procédé selon la présente invention met en œuvre un catalyseur solide qui comprend au moins un métal choisi parmi les métaux des groupes VIB et VIII de la Classification Périodique des Eléments.

De préférence, le catalyseur comprend au moins un métal choisi parmi le cobalt, le nickel, le fer, le platine, le palladium, le molybdène, le tungstène, et le chrome.

Selon un mode de réalisation plus préféré, il comprend au moins un métal du groupe VIII choisi parmi le cobalt et le nickel, et au moins un métal du groupe VIB choisi parmi le molybdène et le tungstène. De manière encore plus préférée, il comprend une des associations métalliques suivantes : CoMo, NiMo, NiW, NiCoMo.

Pour être actif, le catalyseur est employé à l'état activé, c'est-à-dire que les espèces métalliques présentes en surface sont présentes sous forme de sulfures métalliques. La teneur en sulfure(s) de métal ou métaux des groupes VIB et VIII représente généralement de 10 à 80% en poids, par rapport au poids total du catalyseur.

Le catalyseur peut être supporté ou non.

Lorsqu'il n'est pas supporté, le catalyseur contient essentiellement les métaux des groupes VIB et VIII de la Classification Périodique des Eléments, sulfurés au moins sur la surface du catalyseur.

Selon un mode de réalisation préféré, le catalyseur employé est supporté, c'est-à-dire que les sulfures du ou des métaux des groupes VIB et VIII de la Classification Périodique des Eléments sont présents sur un support à base d'un ou plusieurs oxydes minéraux réfractaires. Les oxydes minéraux réfractaires constituant le support peuvent être en particulier choisis parmi les alumines, les silices, les silice-alumines, les zéolithes, les zircones, les oxydes de titane, de calcium ou de magnésium, et les mélanges de tels oxydes.

Dans le cas d'un catalyseur supporté, sa teneur en sulfure(s) de métal ou métaux des groupes VIB et VIII est généralement comprise entre 10 et 30% en poids par rapport au poids total du catalyseur.

De préférence, le catalyseur se présente sous forme de particules poreuses de petite taille telles que par exemple des billes, des particules plus ou moins cylindriques, des extrudés. Il présente une surface spécifique, mesurée par la méthode BET, généralement comprise entre 100 et 300 m²/g, un volume poreux, déterminé par adsorption d'azote, allant de 0,25 à 1 ml/g.

La première étape du procédé de l'invention consiste à mettre en contact le soufre avec le catalyseur, à une température allant de 120 à 160°C.

Cette étape est avantageusement réalisée en faisant circuler le catalyseur chaud issu de la zone réactionnelle dans une zone (A) de mise en contact dans laquelle le soufre élémentaire est introduit à l'état solide.

Typiquement, la mise en contact du soufre et du catalyseur est réalisée directement dans la ligne de recirculation du catalyseur.

On peut également employer en option un dispositif de mélange, afin d'augmenter le brassage des particules de catalyseur et du soufre de manière à optimiser leur mise en contact. Des exemples de tels dispositifs sont une bande vibrante, un tambour rotatif, un mélangeur continu ou un mélangeur discontinu.

On peut employer par exemple un mélangeur continu, alimenté simultanément par le flux de catalyseur et le flux de soufre solide prédosé. Un tel mélangeur est constitué d'un dispositif généralement tubulaire dans lequel tourne un malaxeur hélicoïdal.

De même, on peut employer un tambour rotatif dans lequel les composés solides à mélanger sont pré-dosés et introduits simultanément dans le tambour. La rotation de ce dernier assure un mélange homogène desdits composés solides.

L'utilisation d'un tel dispositif annexe de mélange est uniquement optionnelle. En effet, à la température à laquelle la mise en contact est effectuée, le mélange entre le soufre et les particules de catalyseur circulant s'effectue très rapidement.

La température à laquelle la première étape est effectuée peut être contrôlée à l'aide de thermocouples. Elle va de 120 à 160°C, et plus préférentiellement de 130 à 150°C.

Une telle température permet une fusion rapide du soufre, et l'obtention de soufre liquide ayant une viscosité modérée (typiquement, de 8 à 10 cP soit 8 à 10 mPa.s) qui lui permet de pénétrer dans les pores du catalyseur.

La chaleur nécessaire à la fusion du soufre est apportée par le catalyseur chaud issu de la zone réactionnelle (B). La température à laquelle est effectuée cette étape doit être régulée de manière à rester dans les gammes spécifiées ci-avant. Elle dépend essentiellement de la température et du débit du catalyseur introduit dans la zone (A), ainsi que de la température et du débit de soufre alimentant cette même zone. Lorsque la température du catalyseur en sortie de la zone réactionnelle (B) est trop élevée, un refroidissement préalable de celui-ci peut être effectué avant son introduction dans la zone (A), comme décrit ci-après.

D'une manière générale, la quantité de soufre introduite est dosée par pesée avant injection dans la zone (A) de mise en contact. Selon un mode de réalisation avantageux, elle est asservie, sans excès de soufre, aux besoins en hydrogène sulfuré. Le ratio pondéral de la quantité de soufre introduit sur la quantité de catalyseur circulant peut être ajusté en fonction de l'exothermicité de la réaction, de telle sorte que la température dans la zone réactionnelle ne dépasse pas la température maximale souhaitée.

La quantité de soufre employée au cours de l'étape (a) représente de préférence de 5 à 30% en poids de soufre par rapport au poids de catalyseur, et de préférence de 7 à 20% en poids de soufre par rapport au poids de catalyseur.

L'étape (b) du procédé de l'invention consiste à faire circuler le mélange de soufre et de catalyseur issu de l'étape (a) dans une zone réactionnelle (B) ou réacteur, dans laquelle ledit mélange est mis en contact avec de l'hydrogène de manière à effectuer la conversion du soufre et de l'hydrogène en sulfure d'hydrogène.

Une particularité du procédé de l'invention est que la conversion du soufre en sulfure d'hydrogène est effectuée dans un réacteur à lit mobile de catalyseur, c'est-à-dire un réacteur dans lequel le mélange de catalyseur et de soufre circule de l'entrée vers la sortie du réacteur.

Dans cette zone réactionnelle, de l'hydrogène est injecté. De préférence, l'hydrogène (H₂) est injecté en plusieurs points successifs répartis sur la longueur du réacteur.

L'introduction d'hydrogène en plusieurs points successifs le long du réacteur procure notamment les avantages suivants:
- Elle permet de travailler localement en excès stœchiométrique d'hydrogène pour garantir une conversion maximale de l'hydrogène en sulfure d'hydrogène ;
- Elle permet d'abaisser localement la pression partielle en H₂S et donc de limiter son effet inhibiteur sur la transformation du soufre en H₂S ;
- Elle permet d'étaler le dégagement de la chaleur réactionnelle sur une zone plus longue, et d'obtenir un meilleur contrôle de la température dans le réacteur. En effet, la réaction est très exothermique, et il importe de contrôler précisément la température à l'intérieur du réacteur de manière à ce que celle-ci ne dépasse pas localement 400°C, et de préférence ne dépasse pas localement 300°C.

L'introduction contrôlée du dihydrogène permet un contrôle très précis de la réaction, ce qui permet de maintenir la température à la sortie du réacteur à une valeur inférieure à 300°C et préférablement inférieure à 250°C, et donc permettre au catalyseur d'arriver en entrée de zone (A) à une température comprise entre 120 et 160°C.

L'hydrogène est typiquement injecté avec une stœchiométrie allant de 1 à 10 moles d'hydrogène (H₂) par mole de soufre (S), de préférence de 1 à 2 moles d'hydrogène par mole de soufre, et plus préférentiellement encore de 1 à 1,2 moles d'hydrogène par mole de soufre.

Selon un mode de réalisation particulièrement préféré, l'hydrogène est injecté avec une stœchiométriestrictement supérieure à 1 mole d'hydrogène (H₂) par mole de soufre, ce qui permet de limiter le risque de formation de polysulfanes.

A l'intérieur du réacteur, deux flux circulent, l'un solide et l'autre gazeux:
- Le flux solide est constitué des particules de catalyseur en mélange avec du soufre liquide présent notamment dans les pores du catalyseur. Au fur et à mesure de la progression du catalyseur dans le réacteur, le soufre est converti en sulfure d'hydrogène et les pores du catalyseur s'appauvrissent en soufre ;
- Le flux gazeux contient l'hydrogène n'ayant pas réagi, et le sulfure d'hydrogène (H₂S) formé. La concentration en sulfure d'hydrogène dans le mélange gazeux augmente dans le réacteur, du premier point d'injection de l'hydrogène au point de sortie des effluents gazeux.

La zone réactionnelle (B) peut fonctionner à co-courant ou à contre-courant, selon que le flux solide contenant les particules de catalyseur et le flux gazeux contenant l'hydrogène circulent respectivement dans le même sens, ou en sens contraire dans le réacteur.

La position du point de sortie des effluents gazeux sur le réacteur définit le sens de circulation du système gaz / solide.

Si le point de sortie des effluents gazeux est proche du point d'entrée du catalyseur dans la zone réactionnelle (B), le sens de circulation est dit à contre-courant.

Si le point de sortie des effluents gazeux est proche du point de sortie du catalyseur de la zone réactionnelle (B) le sens de circulation est dit à co-courant.

Selon un mode de réalisation préféré de l'invention, la zone réactionnelle (B) fonctionne à contre-courant, c'est-à-dire que le flux solide contenant les particules de catalyseur et le flux gazeux contenant l'hydrogène circulent en sens contraire dans le réacteur.

Le sens de circulation préféré est le contre-courant car il permet d'obtenir une conversion totale du soufre en hydrogène sulfuré plus rapide. En effet, dans les zones de hautes températures dans lesquelles la vitesse de conversion est la plus importante, la concentration en hydrogène est la plus élevée et celle du sulfure d'hydrogène est la plus faible, ce qui est cinétiquement plus favorable car le sulfure d'hydrogène produit est un inhibiteur de sa propre réaction de synthèse.

Le sens de circulation à co-courant peut également être mis en œuvre dans le cadre de la présente invention. Ce mode de réalisation est moins préféré, car dans cette configuration, dans les zones de hautes températures propices à la transformation du soufre en sulfure d'hydrogène, la concentration en sulfure d'hydrogène est élevée, et celle de l'hydrogène faible. Ainsi de par son effet inhibiteur, le sulfure d'hydrogène ralentit la transformation du soufre en sulfure d'hydrogène. Cependant, la diminution de la vitesse de conversion du soufre en sulfure d'hydrogène peut être compensée par une augmentation du temps de résidence dans la zone la plus zone chaude du réacteur.

En raison du caractère exothermique de la réaction, la température augmente progressivement le long du réacteur, du point d'entrée du catalyseur dans le réacteur vers le point de sortie du catalyseur hors du réacteur.

Selon la présente invention, la température à l'entrée du catalyseur dans la zone réactionnelle est supérieure ou égale à 150°C. De préférence, cette température est supérieure ou égale à 180°C, et encore plus préférentiellement supérieure ou égale à 200°C.

A la sortie du catalyseur de la zone réactionnelle, la température est inférieure ou égale à 300°C, de préférence inférieure ou égale à 250°C.

Selon un mode de réalisation préféré, au cours de l'étape (b) la température dans le réacteur est régulée de manière à rester à une valeur comprise entre 200 et 300°C.

Selon un mode de réalisation particulièrement avantageux, la température augmente le long de la zone réactionnelle d'une valeur de 200°C ± 10°C à une valeur de 290°C ± 10°C.

La température à l'intérieur du réacteur peut être déterminée de manière connue en soi, à l'aide de thermocouples.

La pression à l'intérieur du réacteur est maintenue à une valeur inférieure à 3 bars (3.10⁵ Pa), de préférence inférieure à 2 bars (2.10⁵ Pa), et plus préférentiellement encore inférieure à 1,3 bars (1,3.10⁵ Pa).

La Demanderesse a constaté de manière surprenante que le procédé de l'invention permettait d'obtenir des rendements de conversion totaux du soufre élémentaire, dans ces conditions de température et de pression plus douces que celles généralement employées dans l'art antérieur.

Selon un mode de réalisation particulièrement préféré, la zone réactionnelle comprend un réacteur tubulaire constitué d'une spire hélicoïdale vibrante ascendante. Ainsi, dans la zone réactionnelle, on fait monter le mélange de catalyseur et de soufre le long d'une spire hélicoïdale.

Un tel réacteur est constitué d'une spire vibrante de forme sensiblement tubulaire s'enroulant hélicoïdalement autour d'un axe vertical, et comportant au moins deux pas.

La section transversale de la spire est préférentiellement circulaire et dans ce cas, la spire est un tube. En général, le tube a un diamètre compris entre 100 et 300 mm. Il présente typiquement une longueur développée pouvant aller jusqu'à 400 m.

La hauteur de la spire hélicoïdale peut aller de 5 à 40 m, de préférence de 10 à 20 m.

L'angle de montée de la spire peut aller de 1 degré à 10 degrés, de préférence de 1 à 5 degrés, et plus préférentiellement encore de 1 à 4 degrés.

Le réacteur présente un nombre de spires allant de préférence de 15 et 60, plus préférentiellement de 25 à 40.

Typiquement, le nombre des spires est tel qu'il permette une vitesse de circulation du catalyseur pouvant aller de 250 à 6 000 kg/h, de préférence de 750 à 3 000 kg/h, avec une vitesse spatiale horaire de gaz (ou « Gas Hourly Space Velocity », GHSV) typiquement de 10 à 1000 h⁻¹, de préférence de 30 à 100 h⁻¹. Le catalyseur occupe typiquement de 5 à 80% du volume des spires, de préférence du 10 à 50%.

Ladite spire est avantageusement constituée d'un matériau métallique. De préférence, la spire vibrante est constituée d'un tube en métal, plus préférentiellement en acier.

Elle peut être obtenue par exemple par la mise en forme d'un tube métallique selon une hélice autour d'un axe sensiblement vertical Selon un mode de réalisation avantageux, un fût central permet de rigidifier et de soutenir l'hélice formée par la spire. La spire peut être isolée électriquement du fût central par le système de fixation.

Selon un mode de réalisation préféré, un transformateur alimente le réacteur hélicoïdal en au moins un pas de la spire en courant à basse tension, inférieur à 50V, ce qui permet de chauffer directement par effet Joule la masse métallique du tube à la température requise dans le réacteur.

En particulier, on chauffe un ou plusieurs pas de la spire par effet joule à une température comprise entre 150 et 200°C, notamment en partie basse du réacteur, dans la zone d'entrée du mélange de catalyseur et de soufre. L'effet Joule a pour conséquence directe la génération de chaleur dans la masse de la spire. Il permet d'obtenir une plus grande souplesse pour la maîtrise de la température au cœur de la spire par rapport à un chauffage indirect par fluide caloporteur.

Les vibrations du réacteur hélicoïdal peuvent être produites par au moins un système placé à tout niveau adéquat, par exemple à la base ou au sommet du fût ou encore positionné autour de la spire. Parmi les systèmes de vibration appropriés, on peut citer les systèmes suivants: les moteurs à balourds, les vibrants électromagnétiques (excités par un cycle variable, avec création d'impulsions) et les excitations à balourds. De préférence, les vibrations sont produites par une table servant de support au fût central et actionnée par deux moteurs à balourds.

Au fur et à mesure que le catalyseur monte dans le réacteur sous forme de spire hélicoïdale, la chaleur générée par la réaction permet de maintenir la température du réacteur au niveau requis. En parallèle, les parois tubulaires du réacteur procurent une grande surface d'échange qui permet d'évacuer régulièrement la chaleur le long du réacteur.

Un avantage substantiel procuré par l'emploi d'un réacteur sous forme de spire hélicoïdale dans le cadre de la présente invention est qu'il offre une très grande flexibilité dans le contrôle des paramètres du procédé. Il permet en particulier d'évacuer de manière efficace la chaleur issue de la réaction et/ou un chauffage du milieu réactionnel par effet Joule. L'on peut ainsi effectuer un contrôle très précis de la température de réaction tout au long du réacteur, pour la maintenir à un niveau permettant d'obtenir le niveau désiré de conversion du soufre élémentaire.

A leur sortie de la zone réactionnelle (B), les effluents gazeux sont séparés des particules de catalyseur. Ces effluents sont essentiellement constitués de sulfure d'hydrogène, et peuvent également contenir en quantité minoritaire de l'hydrogène.

Pour améliorer cette séparation, on peut employer tout dispositif connu permettant de séparer un gaz et des particules solides, par exemple un ou plusieurs cyclones ou alors un ou plusieurs filtres électrostatiques.

A la sortie de la zone réactionnelle (B), le catalyseur est ensuite recyclé vers la zone (A), où il est mis en contact avec du soufre conformément à l'étape (a) du procédé.

Le catalyseur sortant de la zone réactionnelle (B) (c'est-à-dire, à l'issue de l'étape (b)) ne contient en général plus de soufre. Toutefois, il est tout à fait possible dans le cadre de la présente invention qu'il reste du soufre en mélange avec le catalyseur, en quantité plus ou moins importante selon le degré de conversion atteint lors de l'étape (b). Dans ce cas, le soufre résiduel n'ayant pas réagi est simplement recyclé avec le catalyseur vers l'étape (a) du procédé, puis vers la zone réactionnelle (B) pour être converti en sulfure d'hydrogène.

Comme cela a été exposé ci-avant, le procédé selon l'invention implique la circulation en boucle du catalyseur entre les différentes zones de l'unité dans laquelle les différentes étapes du procédé sont effectuées. La vitesse de circulation du catalyseur peut typiquement aller de 250 à 6 000 kg/h, de préférence de 500 à 3 000 kg/h.

Le procédé selon l'invention peut avantageusement comprendre en outre une étape d'élimination des fines (ou poussières) de catalyseur, susceptibles de se former dans le catalyseur au fur et à mesure de la circulation de ce catalyseur.

Cette étape peut être effectuée par exemple avant le recyclage du catalyseur vers l'étape (a). Elle peut être réalisée en faisant passer le catalyseur au travers d'un ou plusieurs dispositifs de tamisage, tels que par exemple des tamis vibrants ou rotatifs.

Selon un mode de réalisation particulièrement avantageux de l'invention, le catalyseur issu de la zone réactionnelle est refroidi avant d'être remis en contact avec du soufre lors de l'étape (a).

En effet, en raison du caractère fortement exothermique de la réaction de synthèse de l'hydrogène sulfuré, la chaleur véhiculée par le catalyseur peut être trop importante pour permettre sa réintroduction directe dans la zone de contact (A), étant donné que la température de celle-ci ne doit pas dépasser 160°C.

Le refroidissement du catalyseur peut être effectué par exemple en faisant passer le catalyseur au travers d'un dispositif de refroidissement tel qu'un échangeur de chaleur. Un tel dispositif est situé entre la zone réactionnelle (B) et la zone (A) de mise en contact du catalyseur avec le soufre.

Selon un mode de réalisation avantageux de l'invention, la partie aval du réacteur employé à l'étape (b) peut être utilisée comme zone de refroidissement du catalyseur. Dans le cas d'un réacteur constitué d'une spire hélicoïdale vibrante ascendante, cet objectif peut être atteint en utilisant les dernières spires comme zone de refroidissement. Le refroidissement peut être passif, c'est-à-dire qu'on laisse simplement le catalyseur et le mélange réactionnel circulant dans ces spires refroidir en ne les chauffant pas, et en ne les isolant pas thermiquement de manière à permettre à la chaleur de se dissiper au travers des parois tubulaires, et en n'y injectant pas d'hydrogène. On peut également pratiquer en outre dans les dernières spires du réacteur un refroidissement actif, au moyen d'un dispositif approprié, par exemple en faisant passer sur les spires un fluide refroidissant.

Le procédé selon l'invention peut également comprendre une étape de purification des effluents gazeux issus de l'étape (c) de séparation, afin de purifier le sulfure d'hydrogène produit, et d'en éliminer les autres composés susceptibles d'être présents tels que par exemple le soufre résiduel.

Une première possibilité consiste à faire passer les effluents gazeux au travers d'un dispositif de refroidissement permettant la condensation des impuretés. Une autre possibilité consiste à faire passer les effluents gazeux au travers d'un ou plusieurs dispositifs adsorbants tel que par exemple une colonne contenant de l'alumine ou un autre matériau poreux.

La composition du flux gazeux en sortie de la zone réactionnelle est avantageusement mesurée en ligne par des techniques connues telles que la chromatographie en phase gazeuse ou la spectroscopie. Une telle détermination en ligne de la composition des effluents permet de réguler en temps réel les flux d'introduction de soufre et d'hydrogène aux différentes étapes du procédé.

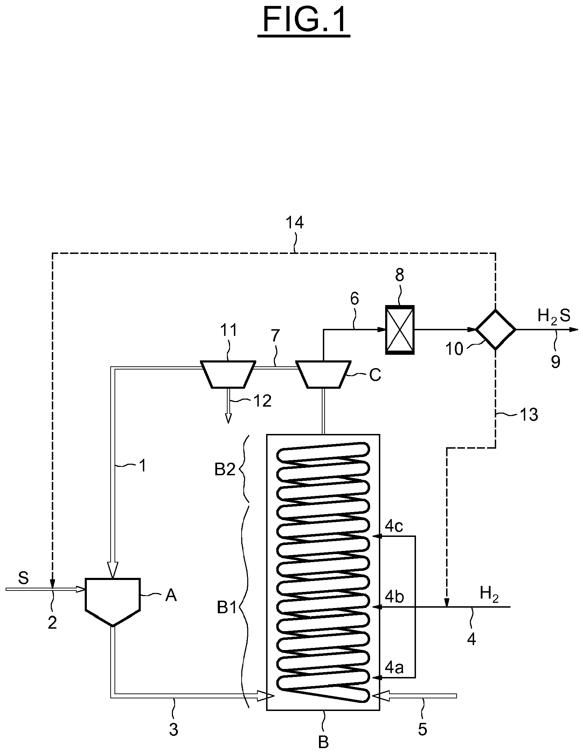

La Figure 1 illustre un mode de mise en oeuvre du procédé selon l'invention, dans lequel la zone réactionnelle (B) fonctionne à co-courant.

Cette figure représente une unité de production d'hydrogène sulfuré, dans laquelle le catalyseur circule en boucle d'une zone (A) de mise en contact avec le soufre, vers une zone réactionnelle (B), puis vers une zone (C) de séparation du catalyseur et des effluents réactionnels, avant d'être recyclé dans la zone (A).

La zone (A) est constituée d'une enceinte dans laquelle les particules de catalyseur sont amenées par le conduit 1, tandis que le soufre élémentaire est introduit via le conduit 2. Dans l'enceinte (A) la température est maintenue à une valeur située entre 120 et 160°C.

Le temps de séjour du catalyseur dans la zone (A) de mise en contact est typiquement de 1 à 20 minutes, de préférence de 3 à 10 minutes.

Le mélange de catalyseur et de soufre fondu sortant de l'enceinte (A) est ensuite transporté au moyen du conduit 3, vers la zone réactionnelle (B). Celle-ci est constituée d'un réacteur tubulaire constitué d'une spire hélicoïdale vibrante ascendante, dans laquelle le mélange de catalyseur et de soufre monte.

Un appoint de catalyseur frais peut être ajouté à l'entrée du réacteur (B), au moyen du conduit 5.

De l'hydrogène, amené par le conduit 4, est injecté dans la partie basse du réacteur, via les lignes 4a, 4b et 4c. Dans le mode de réalisation illustré en Figure 1, cette injection a lieu en trois points du réacteur (B). Il convient de noter que ce mode de réalisation n'est nullement limitatif, les injections d'hydrogène pouvant être réalisées en un ou plusieurs points du réacteur.

Dans le réacteur (B), la température est contrôlée de manière à conserver une température d'entrée en partie basse supérieure à 150°C, et une température de sortie en partie haute inférieure à 300°C. La pression est inférieure à 3 bars.

Afin de maintenir la température réactionnelle à une valeur suffisante, la zone amont B1 du réacteur est chauffée par effet Joule, en l'alimentant en un ou plusieurs pas de la spire par un courant électrique à basse tension non représenté.

En option, dans zone aval B2 du réacteur (B), les spires ne sont pas chauffées et il n'y a plus d'injection d'hydrogène, de manière à permettre un début de refroidissement du catalyseur et des effluents gazeux.

Le temps de séjour du catalyseur dans la zone réactionnelle (B) est typiquement de 5 à 120 minutes, de préférence de 10 à 40 minutes.

A la sortie du réacteur (B), le catalyseur et les effluents gazeux sont dirigés vers une unité (C) de séparation du catalyseur et des effluents gazeux.

Les particules de catalyseur sont ensuite dirigées via le conduit 7 vers un dispositif optionnel 11 de tamisage, qui permet d'éliminer du procédé les fines (ou poussières) de catalyseur éventuellement présentes, qui sont évacuées via la ligne 12. Le catalyseur est ensuite recyclé via la ligne 1 vers la zone (A) de mise en contact avec le soufre.

Au cours de leur passage dans les spires de la zone B2 qui font office d'échangeur de chaleur, puis dans le séparateur (C) et enfin dans le tamis 11, les particules de catalyseur se refroidissent progressivement à une température appropriée permettant leur réintroduction dans la zone de contact (A) dans laquelle la température ne doit pas dépasser 160°C.

Les effluents gazeux issus du séparateur (C) sont ensuite dirigés via la ligne 6 vers un dispositif de séparation 8 optionnel, tel que par exemple un piège solide à froid, un filtre ou un cyclone.

L'hydrogène sulfuré ainsi produit est récupéré via la ligne 9.

En option, un dispositif 10 d'analyse en ligne permet de déterminer la quantité d'hydrogène sulfuré produit, et d'ajuster en conséquence les quantités respectives d'hydrogène et de soufre introduits, comme schématisé par les lignes de rétrocontrôle en pointillés 13 et 14.

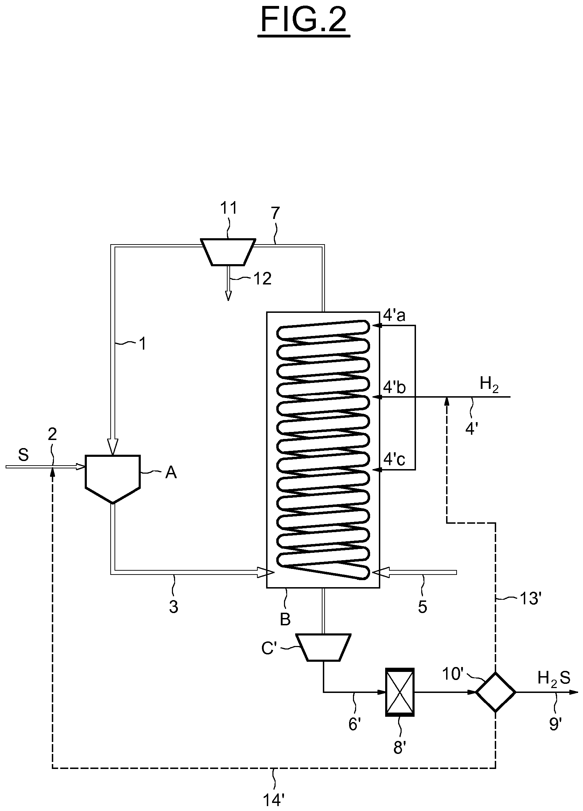

La Figure 2 illustre un mode de mise en œuvre préféré du procédé selon l'invention, dans lequel la zone réactionnelle (B) fonctionne à contre-courant.

Cette figure représente une unité de production d'hydrogène sulfuré, dans laquelle le catalyseur circule en boucle d'une zone (A) de mise en contact avec le soufre, vers une zone réactionnelle (B).

Le descriptif de ce procédé est le même que pour la Figure 1, les références désignant les mêmes éléments.

Les différences sont les suivantes :
L'hydrogène, amené par le conduit 4', est injecté dans la partie haute du réacteur, via les lignes 4'a, 4'b et 4'c.

La séparation du catalyseur et des effluents réactionnels s'effectue en partie basse du réacteur, dans la zone de séparation (C'). Le sulfure d'hydrogène est récupéré via la ligne 6' et évacué via la ligne 9'.

Les dispositifs optionnels de purification 8', d'analyse 10' et de rétrocontrôle des quantités d'hydrogène 13' et de soufre 14' sont identiques aux dispositifs correspondants 8, 10, 13 et 14 décrits pour la Figure 1.

## Revendications

1. Procédé de production de sulfure d'hydrogène à partir d'hydrogène et de soufre élémentaire, comprenant les étapes suivantes :
(a) La mise en contact du soufre avec un catalyseur solide comprenant au moins un métal, choisi parmi les métaux des groupes VIB et VIII de la Classification Périodique des Eléments, sous forme de sulfure métallique, à une température allant de 120 à 160°C ;
(b) La circulation du mélange de soufre et de catalyseur issu de l'étape (a) dans une zone réactionnelle, dans laquelle ledit mélange est mis en contact avec de l'hydrogène, la zone réactionnelle présentant une température au point d'entrée du catalyseur supérieure ou égale à 150°C et une température au point de sortie du catalyseur inférieure ou égale à 300°C, et une pression inférieure ou égale à 3.10⁵ Pa ;
(c) La séparation du catalyseur et des effluents gazeux contenant de l'hydrogène sulfuré ; et
(d) Le recyclage du catalyseur vers l'étape (a).

2. Procédé selon la revendication 1, **caractérisé en ce que** la température à laquelle l'étape (a) est effectuée va de 130 à 150°C.

3. Procédé selon l'une des revendications précédentes, **caractérisé en ce que** la quantité de soufre employée au cours de l'étape (a) représente de 5 à 30% en poids de soufre par rapport au poids de catalyseur, et de préférence de 7 à 20% en poids de soufre par rapport au poids de catalyseur.

4. Procédé selon l'une des revendications précédentes, **caractérisé en ce que** au cours de l'étape (b) l'hydrogène est injecté en plusieurs points répartis sur la longueur du réacteur.

5. Procédé selon l'une des revendications précédentes, **caractérisé en ce que** l'hydrogène est injecté avec une stœchiométrie allant de 1 à 10 moles d'hydrogène (H₂) par mole de soufre (S), de préférence de 1 à 2 moles d'hydrogène par mole de soufre, et plus préférentiellement encore de 1 à 1,2 moles d'hydrogène par mole de soufre.

6. Procédé selon l'une des revendications précédentes, **caractérisé en ce que** la température à l'entrée du catalyseur dans la zone réactionnelle est supérieure ou égale à 180°C, et encore plus préférentiellement supérieure ou égale à 200°C.

7. Procédé selon l'une des revendications précédentes, **caractérisé en ce que** la température à la sortie du catalyseur de la zone réactionnelle est inférieure ou égale à 250°C.

8. Procédé selon l'une des revendications précédentes, **caractérisé en ce que** la température augmente le long de la zone réactionnelle d'une valeur de 200°C ± 10°C à une valeur de 290°C ± 10°C.

9. Procédé selon l'une des revendications précédentes, **caractérisé en ce que** la pression à l'intérieur du réacteur est inférieure à 2.10⁵ Pa, et plus préférentiellement encore inférieure à 1,3.10⁵ Pa.

10. Procédé selon l'une des revendications précédentes, **caractérisé en ce que** la zone réactionnelle comprend un réacteur tubulaire constitué d'une spire hélicoïdale vibrante ascendante.

11. Procédé selon la revendication précédente, **caractérisé en ce que** l'on chauffe un ou plusieurs pas de la spire du réacteur par effet Joule.

12. Procédé selon l'une des revendications précédentes, **caractérisé en ce que** le catalyseur issu de la zone réactionnelle est refroidi avant d'être remis en contact avec du soufre lors de l'étape (a).

13. Procédé selon la revendication précédente, **caractérisé en ce que** la partie aval du réacteur employé à l'étape (b) est utilisée comme zone de refroidissement du catalyseur.

14. Procédé selon l'une des revendications précédentes, **caractérisé en ce que** le catalyseur comprend le ou les métaux des groupes VIB et VIII de la Classification Périodique des Eléments, sous forme de sulfures métalliques, déposés sur un support à base d'un ou plusieurs oxydes minéraux réfractaires, la teneur du catalyseur en sulfure(s) de métal ou métaux des groupes VIB et VIII étant de préférence comprise entre 10 et 30% en poids, par rapport au poids total du catalyseur.

15. Procédé selon l'une des revendications précédentes, **caractérisé en ce que** la zone réactionnelle fonctionne à co-courant, le flux solide contenant les particules de catalyseur et le flux gazeux contenant l'hydrogène circulant dans le même sens dans le réacteur.

16. Procédé selon l'une des revendications 1 à 14, **caractérisé en ce que** la zone réactionnelle fonctionne à contre-courant, le flux solide contenant les particules de catalyseur et le flux gazeux contenant l'hydrogène circulant en sens contraire dans le réacteur.

## Patentansprüche

1. Verfahren zur Herstellung von Schwefelwasserstoff aus Wasserstoff und elementarem Schwefel, die folgenden Schritte umfassend:
(a) In-Kontakt-bringen des Schwefels mit einem Feststoffkatalysator, der mindestens ein Metall umfasst, das aus den Metallen der Gruppen VIB und VIII des Periodensystems in Form von metallischem Schwefel ausgewählt wird, bei einer Temperatur von 120 bis 160°C;
(b) Zirkulieren des Schwefel- und Katalysatorgemisches aus dem Schritt (a) in einer Reaktionszone, in der das Gemisch in Kontakt mit dem Wasserstoff gebracht wird, wobei die Reaktionszone eine Temperatur am Eingangspunkt des Katalysators von größer oder gleich 150°C und eine Temperatur am Ausgangspunkt des Katalysators kleiner oder gleich 300°C und einen Druck kleiner oder gleich 3.10⁵ Pa aufweist;
(c) Trennen des Katalysators und der Schwefelwasserstoff enthaltenden Abgase; und
(d) Recycling des Katalysators zu Schritt (a).

2. Verfahren nach Anspruch 1, **dadurch gekennzeichnet, dass** die Temperatur, bei der (a) ausgeführt wird, von 130 bis 150°C reicht.

3. Verfahren nach einem der vorstehenden Ansprüche, **dadurch gekennzeichnet, dass** die Menge des in Schritt (a) eingesetzten Schwefels von 5 bis 30 Gew.-% an Schwefel in Bezug auf das Katalysatorgewicht, und vorzugsweise von 7 bis 20 Gew.-% an Schwefel in Bezug auf das Katalysatorgewicht darstellt.

4. Verfahren nach einem der vorstehenden Ansprüche, **dadurch gekennzeichnet, dass** im Laufe des Schrittes (b) Wasserstoff an mehreren Punkten injiziert wird, die über die Länge des Reaktors verteilt sind.

5. Verfahren nach einem der vorstehenden Ansprüche, **dadurch gekennzeichnet, dass** Wasserstoff mit einer Stöchiometrie injiziert wird, die von 1 bis 10 Wasserstoff-Mol (H₂) je Schwefel-Mol (S), vorzugsweise von 1 bis 2 Wasserstoff-Mol je Schwefel-Mol und besonders bevorzugt von 1 bis 1,2 Wasserstoff-Mol je Schwefel-Mol reicht.

6. Verfahren nach einem der vorstehenden Ansprüche, **dadurch gekennzeichnet, dass** die Temperatur am Eingang des Katalysators in der Reaktionszone größer oder gleich 180°C und noch bevorzugter größer oder gleich 200°C ist.

7. Verfahren nach einem der vorstehenden Ansprüche, **dadurch gekennzeichnet, dass** die Temperatur am Ausgang des Katalysators der Reaktionszone kleiner oder gleich 250°C ist.

8. Verfahren nach einem der vorstehenden Ansprüche, **dadurch gekennzeichnet, dass** sich die Temperatur entlang der Reaktionszone von einem Wert von 200°C ± 10 °C auf einen Wert von 290°C ± 10 °C erhöht.

9. Verfahren nach einem der vorstehenden Ansprüche, **dadurch gekennzeichnet, dass** der Druck im Inneren des Reaktors kleiner als 2.10⁵ Pa und noch bevorzugter kleiner als 1,3.10⁵ Pa ist.

10. Verfahren nach einem der vorstehenden Ansprüche, **dadurch gekennzeichnet, dass** die Reaktionszone einen rohrförmigen Reaktor umfasst, der aus einem ansteigenden vibrierenden Gewindegang besteht.

11. Verfahren nach dem vorstehenden Anspruch, **dadurch gekennzeichnet, dass** eine oder mehrere Steigungen des Gewindeganges des Reaktors durch Joule-Effekt erwärmt werden.

12. Verfahren nach einem der vorstehenden Ansprüche, **dadurch gekennzeichnet, dass** der aus der Reaktionszone stammende Katalysator abgekühlt wird, bevor er in Schritt (a) in Kontakt mit dem Schwefel wieder gebracht wird.

13. Verfahren nach dem vorstehenden Anspruch, **dadurch gekennzeichnet, dass** der stromabwärtige Teil des in Schritt (b) eingesetzten Reaktors als Kühlzone des Katalysators verwendet wird.

14. Verfahren nach einem der vorstehenden Ansprüche, **dadurch gekennzeichnet, dass** der Katalysator das oder die Metalle der Gruppen VIB und VIII des Periodensystems in Form von Metallsulfiden umfasst, die auf einem Träger auf Basis eines oder mehrerer feuerfester Mineraloxide abgeschieden werden, wobei der Gehalt des Katalysators an Metallsulfid(en) oder Metallen der Gruppen VIB und VIII vorzugsweise zwischen 10 und 30 Gew.-% in Bezug auf das Gesamtgewicht des Katalysators enthalten ist.

15. Verfahren nach einem der vorstehenden Ansprüche, **dadurch gekennzeichnet, dass** die Reaktionszone im Gleichstrom funktioniert, wobei der Feststofffluss, der die Katalysatorpartikel enthält, und der Gasfluss, der den Wasserstoff enthält, in dem Reaktor in derselben Richtung zirkulieren.

16. Verfahren nach einem der Ansprüche 1 bis 14, **dadurch gekennzeichnet, dass** die Reaktionszone im Gegenstrom funktioniert, wobei der Feststofffluss, der die Katalysatorpartikel enthält, und der Gasfluss, der den Wasserstoff enthält, in dem Reaktor in entgegengesetzter Richtung zirkulieren.

## Claims

1. A method for producing hydrogen sulphide from hydrogen and elemental sulphur, comprising the following steps:
(a) Contacting sulphur with a solid catalyst comprising at least one metal, selected from metals of groups VIB and VIII of the Periodic Table of Elements, in the form of metal sulphide, at a temperature ranging from 120 to 160°C;
(b) Circulating the mixture of sulphur and of catalyst resulting from step (a) in a reaction area, wherein said mixture is contacted with hydrogen, the reaction area having a temperature at the point of intake of catalyst greater than or equal to 150°C and a temperature at the point of outlet of the catalyst less than or equal to 300°C, and a pressure less than or equal to 3.10⁵ Pa;
(c) Separating the catalyst and the off-gas containing hydrogen sulphide; and
(d) Recycling the catalyst to step (a).

2. The method according to claim 1, **characterised in that** the temperature at which step (a) is carried out ranges from 130 to 150°C.

3. The method according to one of the preceding claims, **characterised in that** the amount of sulphur used during step (a) represents from 5 to 30% by weight of sulphur relative to the weight of catalyst, and preferably from 7 to 20% by weight of sulphur relative to the weight of catalyst.

4. The method according to one of the preceding claims, **characterised in that** during step (b) the hydrogen is injected at several points distributed over the length of the reactor.

5. The method according to one of the preceding claims, **characterised in that** the hydrogen is injected with a stoichiometry ranging from 1 to 10 moles of hydrogen (H₂) per mole of sulphur (S), preferably from 1 to 2 moles of hydrogen per mole of sulphur, and more preferably still from 1 to 1.2 moles of hydrogen per mole of sulphur.

6. The method according to one of the preceding claims, **characterised in that** the temperature at the intake of the catalyst into the reaction area is greater than or equal to 180°C, and even more preferably greater than or equal to 200°C.

7. The method according to one of the preceding claims, **characterised in that** the temperature at the outlet of the catalyst from the reaction area is less than or equal to 250°C.

8. The method according to one of the preceding claims, **characterised in that** the temperature increases along the reaction area from a value of 200°C ± 10°C to a value of 290°C ± 10°C.

9. The method according to one of the preceding claims, **characterised in that** the pressure inside the reactor is less than 2.10⁵ Pa, and more preferably still less than 1.3.10⁵ Pa.

10. The method according to one of the preceding claims, **characterised in that** the reaction area comprises a tubular reactor consisting of an ascending vibrating helical coil.

11. The method according to the preceding claim, **characterised in that** one or more pitches of the coil of the reactor are heated by the Joule effect.

12. The method according to one of the preceding claims, **characterised in that** the catalyst from the reaction area is cooled before being contacted again with sulphur during step (a).

13. The method according to the preceding claim, **characterised in that** the downstream portion of the reactor used in step (b) is used as catalyst cooling area.

14. The method according to one of the preceding claims, **characterised in that** the catalyst comprises the metal(s) from groups VIB and VIII of the Periodic Table of Elements, in the form of metal sulphides, deposited on a support based on one or several refractory inorganic oxides, the content of the sulphide(s) of metal(s) from groups VIB and VIII in the catalyst preferably being comprised between 10 and 30% by weight, relative to the total weight of the catalyst.

15. The method according to one of the preceding claims, **characterised in that** the reaction area operates in cocurrent, the solid stream containing the catalyst particles and the gas stream containing hydrogen circulating in the same direction in the reactor.

16. The method according to one of claims 1 to 14, **characterised in that** the reaction area operates in countercurrent, the solid stream containing the catalyst particles and the gas stream containing hydrogen circulating in the opposite direction in the reactor.
